# EUROPÄISCHE PATENTSCHRIFT

(11) **EP 3 704 920 B1**
(45) Veröffentlichungstag und Bekanntmachung des Hinweises auf die Patenterteilung: **10.07.2024**
(21) Anmeldenummer: 20160954.2
(22) Anmeldetag: 04.03.2020
(51) Int. Cl.: A01B 33/00, A01B 33/02, A01B 33/10, A01B 33/16, A01B 45/02, B60B 1/00, B60B 37/00, B60B 37/10

(54) **LANDWIRTSCHAFTLICHES EINACHSFAHRZEUG**
AGRICULTURAL SINGLE AXLE VEHICLE
VÉHICULE AGRICOLE À ESSIEU SIMPLE

(30) Priorität: 05.03.2019 DE 102019105531; 05.03.2019 DE 202019101237 U
(43) Veröffentlichungstag der Anmeldung: 09.09.2020
(73) Patentinhaber: Rapid Technic GmbH, 88693 Deggenhausertal/Mennwangen (DE)
(72) Erfinder: Martin Brielmeier, 88048 Friedrichshafen (DE)
(74) Vertreter: Patentanwälte und Rechtsanwalt Weiß, Arat & Partner mbB

(56) Entgegenhaltungen:
- EP-A1- 1 731 014
- EP-A1- 2 835 044
- EP-A1- 3 251 481
- CN-U- 203 934 286
- DE-A1- 102016 110 810
- US-A1- 2008 196 374

## Beschreibung

### Technisches Gebiet

Die Erfindung betrifft ein landwirtschaftliches Einachsfahrzeug nach dem Oberbegriff des Anspruchs 1.

### Stand der Technik

Derartige Einachsfahrzeuge sind bereits in vielfältiger Form und Ausgestaltung bekannt und gebräuchlich. Derartige Einachsfahrzeuge sind bereits in vielfältiger Form und Ausgestaltung bekannt und gebräuchlich.

In der EP 3 251 481 A1, der EP 1 731 014 A1 der EP 2 835 044 A1, der DE 10 2016 110 810 A1 und der CN 203 934 286 U werden beispielsweise Einachsfahrzeuge mit sämtlichen Merkmalen des Oberbegriffs beschrieben.

In diesem Zusammenhang wird außerdem auf die US 2008/0196374 A1 hingewiesen, welche ein Trittbrett für einen Mäher offenbart, wobei das Trittbrett bei Nichtnuzung hochklappbar angeordnet ist.

So wird beispielsweise in der DE 10 2005 026 754 A1 ein Einachsfahrzeug offenbart, bei dem der Antrieb für zumindest eine Fahrwalze in der Fahrwalze selbst angeordnet ist.

Außerdem wird auf die DE 10 2005 026 761 A1 hingewiesen, welche ein Fahrzeug mit zumindest einer Fahrwalze mit einem Walzenmantel aufweist, auf dessen Oberfläche sich Vorsprünge mit einer Spitze befinden, wobei die Vorsprünge pyramiden- oder kegelförmig als Stacheln ausgebildet sind.

### Aufgabe der Erfindung

Die Aufgabe der vorliegenden Erfindung ist es, ein landwirtschaftliches Einachsfahrzeug zur Verfügung zu stellen, bei dem der Nutzer nicht mehr hinterherlaufen muss, sondern auf dem landwirtschaftlichen Einachsfahrzeug mitfahren kann.

### Lösung der Aufgabe

Zur Lösung der Aufgabe führen die Merkmale nach dem Anspruch 1.

Vorteilhafte Ausgestaltungen sind in den Unteransprüchen beschrieben.

Das erfindungsgemäße landwirtschaftliche Einachsfahrzeug besteht in erster Linie aus einer Mittelachse, wobei die Mittelachse jeweils endseitig eine Stachelwalze aufweist. Das bedeutet, dass die Mittelachse einends die erste Stachelwalze und andernends die zweite Stachelwalze aufweist. Der Umfang, das Material oder die Länge der Stachelwalzen sind dabei von untergeordneter Bedeutung. Bevorzugt handelt es sich um eine Stachelwalze aus Aluminium aus dem Stand der Technik.

Die Mittelachse umfasst dabei einen Antrieb und ein koppelbar verbundenes Landwirtschaftswerkzeug. Bei dem Landwirtschaftswerkzeug kann es sich beispielsweise um einen Mähbalken oder einen Mulcher oder ein anderes landwirtschaftliches Werkzeug handeln. Koppelbar bedeutet hierbei, dass das landwirtschaftliche Werkzeug von dem landwirtschaftlichen Einachsfahrzeug abgekoppelt und ein anderes landwirtschaftliches Werkzeug angekoppelt werden kann.

Bei dem Antrieb handelt es sich üblicherweise um einen Verbrennungsmotor. Es kann sich aber auch um einen Elektroantrieb oder eine andere Art von Antrieb handeln, wobei die Mittelachse dabei als Antriebsstrang des landwirtschaftlichen Einachsfahrzeugs dient.

Weitere Merkmale, wie beispielsweise eine Kühleinrichtung oder Hydraulikschläuche zur Kraftübertragung oder eine Steuerung sind regelmäßig ebenfalls vorhanden, werden aber im Rahmen der Erfindung nicht weiter erwähnt.

Dabei umfasst die Mittelachse ein schwenkbar gehaltertes Trittbrett. Schwenkbar gehaltert bedeutet dabei, dass es je nach befahrener Steigung, Vorschubrichtung quer zum Hang oder direkt zum Hang hin oder auch auf ebener Fläche bei Kurvenfahrten immer selbst durch die schwenkbare Halterung die optimale Position für den Fahrzeugführer einnimmt und dabei den Fahrzeugführer angenehm in jeder Lage positioniert.

Das Trittbrett weist dabei eine Pendelstange auf, wobei die Pendelstange einends das Trittbrett ausbildet und andernends ein Pendelgelenk. Die Länge der Pendelstange ist dabei frei wählbar, solange das Trittbrett nicht wesentlich durch einen Fahruntergrund behindert werden kann. Auch das Pendelgelenk kann 360° drehbar angeordnet sein, wobei bevorzugt eine erlaubte Pendelbewegung von 90° bis 180° eingestellt ist.

Dabei ist das Pendelgelenk Teil der Mittelachse. Folglich umfasst die Mittelachse das Pendelgelenk. Dabei ist das Pendelgelenk im Wesentlichen mittig an der Mittelachse angebracht.

Das Trittbrett weist eine erste Seitenwand und eine zweite Seitenwand auf. Dadurch ergibt sich die Form einer U-förmigen Rinne. Die beiden Seitenwandungen geben dem Fahrzeugführer zusätzlichen Halt und erhöhen dadurch wiederum die Sicherheit beim Einsatz des landwirtschaftlichen Einachsfahrzeugs.

Die Mittelachse weist eine Festlegekulisse auf. Die Festlegekulisse weist dabei eine Teilkreisform auf, um die Pendelbewegung des schwenkbar gehalterten Trittbretts ideal nachzubilden. Die Feststellkulisse ist dabei zwischen der Mittelachse und dem Trittbrett angeordnet. Es ist dabei als Teil der Mittelachse ausgebildet oder zumindest fest mit der Mittelachse verbunden.

Weiter umfasst das Trittbrett eine Festlegeanordnung. Die Festlegeanordnung ist dabei regelmäßig eine oder mehrere Stifte, die das Trittbrett zu der Festlegekulisse bzw. zu dem Mittelteil hin ausbildet. Die Festlegeanordnung kann dabei federgelagert oder fest als Teil des Trittbretts ausgeführt sein. Außerdem ist die Festlegeanordnung in eine Festlegeausnehmung der Festlegekulisse einbringbar. Auf diese Weise kann das Trittbrett auch in einer bestimmten Schwenkposition festgelegt sein. Dies hat den Vorteil, dass die bei frei verschwenkbaren Trittbrettern auftretenden unangenehmen Aufschaukelbewegungen verhindert werden.

Außerdem wird gesondert Schutz begehrt für ein Trittbrett zur Nachrüstung eines landwirtschaftlichen Einachsfahrzeuges. Dabei besteht das landwirtschaftliche Einachsfahrzeug wiederum in erster Linie aus der Mittelachse, wobei an dessen Enden jeweils endseitig eine Stachelwalze angeordnet ist und dabei die Mittelachse einen Antrieb umfasst. Weitere Merkmale, wie beispielsweise eine Kühleinrichtung oder Hydraulikschläuche zur Kraftübertragung oder eine Steuerung sind regelmäßig ebenfalls vorhanden, werden aber im Rahmen der Erfindung nicht weiter erwähnt.

Zur Nachrüstung ist das Trittbrett über eine Pendelstange an der Mittelachse anbringbar, wobei die Pendelstange einends das Trittbrett ausbildet und andernends ein Pendelgelenk ausbildet, wobei die Mittelachse das Pendelgelenk eine Festlegekulisse aufweist und das Trittbrett eine Festlegeanordnung umfasst, wobei die Festlegeanordnung in eine Festlegeausnehmung der Festlegekulisse einbringbar ist. Anbringbar bedeutet in diesem Zusammenhang jede Einrichtung der Mittelachse zur späteren Aufnahme und/oder Halterung des schwenkbaren Trittbretts.

Dabei weist das schwenkbar gehalterte Trittbrett eine erste Seitenwand und eine zweite Seitenwand auf.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine schematische Draufsicht auf ein landwirtschaftliches Einachsfahrzeug mit einem landwirtschaftlichen Werkzeug;
- Figur 2: eine Ansicht von hinten auf das landwirtschaftliche Einachsfahrzeug aus der Figur 1 mit einer Schnittlinie A-A;
- Figur 3: eine Schnittansicht der Figur 2 in der Schnittlinie A-A.

### Ausführungsbeispiel

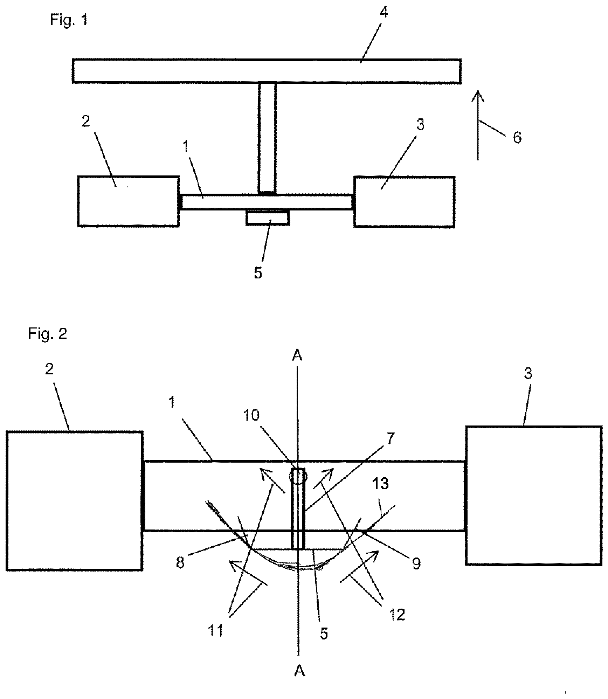

In Figur 1 ist ein landwirtschaftliches Einachsfahrzeug dargestellt, welches in erster Linie aus einer Mittelachse 1 besteht, welche einends eine erste Stachelwalze 2 und andernends eine zweite Stachelwalze 3 aufweist.

Außerdem ist ein an der Mittelachse ein koppelbar verbundenes Landwirtschaftswerkzeug 4 gezeigt. Eine Vorschubrichtung 6 zeigt an, dass das landwirtschaftliche Einachsfahrzeug in Richtung des Landwirtschaftswerkzeugs 4 verfahren wird. Außerdem ist in der Figur 1 schematisch an der Mittelachse 1 ein schwenkbar gehaltertes Trittbrett 5 gezeigt. Das Trittbrett 5 ist dabei auf der dem Landwirtschaftswerkzeug 4 abgewandten Seite der Mittelachse 1 angeordnet.

In Figur 2 ist eine Ansicht von hinten also in Richtung der Vorschubrichtung 6 gezeigt.

Dort ist zu erkennen, dass das Trittbrett 5 eine Pendelstange 7 aufweist, wobei die Pendelstange 7 einends das Trittbrett 5 ausbildet und andernends ein Pendelgelenk 10.

Die ersten Pendelpfeile 11 deuten an, dass das Trittbrett 5 in Richtung der ersten Stachelwalze 2 hin pendeln kann. Die zweiten Pendelpfeile 12 deuten an, dass das Trittbrett 5 in einer anderen Lage zu der zweiten Stachelwalze 3 hin pendeln können.

Dabei umfasst die Mittelachse 1 das Pendelgelenk 10.

Das Trittbrett 5 bildet außerdem eine erste Seitenwand 8 und eine zweite Seitenwand 9 aus. Dadurch formt das Trittbrett 5 eine U-förmige Rinne mit ebenem Rinnenboden aus.

Die Mittelachse 1 weist weiterhin eine Festlegekulisse 13 auf. Die Festlegekulisse 13 bildet dabei eine Teilkreisform, um die Pendelbewegung des Trittbretts 5 abzubilden.

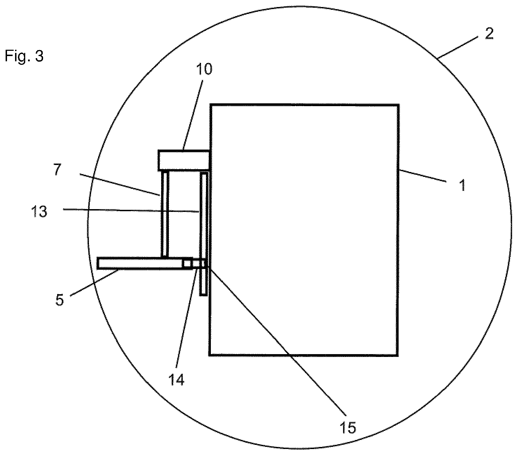

Zuletzt ist eine Schnittlinie A-A gezeigt. In der Figur 3 ist die Schnittansicht der Figur 2 an der Schnittlinie A-A gezeigt. Dabei ist die Sichtrichtung von der zweiten Stachelwalze 3 zu der ersten Stachelwalze 2 hin.

Das Trittbrett 5 eine Festlegeanordnung 14. Bei der Festleganordnung 14 handelt es sich um einen Stift, welcher zu der Festlegekulisse 13 hin ausgebildet ist.

Dabei greift in Figur 3 die Festlegeanordnung 14 in eine Festlegeausnehmung 15 der Festlegekulisse 13 ein.

### Bezugszeichenliste

| | |
|---|---|
| 1 | Mittelachse |
| 2 | Erste Stachelwalze |
| 3 | Zweite Stachelwalze |
| 4 | Landwirtschaftswerkzeug |
| 5 | Trittbrett |
| 6 | Vorschubrichtung |
| 7 | Pendelstange |
| 8 | Erste Seitenwand |
| 9 | Zweite Seitenwand |
| 10 | Pendelgelenk |
| 11 | Erster Pendelpfeil |
| 12 | Zweiter Pendelpfeil |
| 13 | Festlegekulisse |
| 14 | Festlegeanordnung |
| 15 | Festlegeausnehmung |

## Patentansprüche

1. Landwirtschaftliches Einachsfahrzeug mit einer Mittelachse (1), wobei die Mittelachse (1) jeweils endseitig eine Stachelwalze (2, 3) aufweist, wobei die Mittelachse (1) einen Antrieb aufweist und ein koppelbar verbundenes Landwirtschaftswerkzeug (4),
wobei
die Mittelachse (1) ein schwenkbar gehaltertes Trittbrett (5) umfasst, **dadurch gekennzeichnet, dass** die Mittelachse (1) eine Festlegekulisse (13) aufweist, wobei das Trittbrett (5) eine Festlegeanordnung (14) umfasst und die Festlegeanordnung (14) in eine Festlegeausnehmung (15) der Festlegekulisse (13) einbringbar ist.

2. Landwirtschaftliches Einachsfahrzeug nach Anspruch 1, **dadurch gekennzeichnet, dass** das Trittbrett (5) eine Pendelstange (7) aufweist, wobei die Pendelstange (7) einends das Trittbrett (5) ausbildet und andernends ein Pendelgelenk (10).

3. Landwirtschaftliches Einachsfahrzeug nach Anspruch 2, **dadurch gekennzeichnet, dass** die Mittelachse (1) das Pendelgelenk (10) umfasst.

4. Landwirtschaftliches Einachsfahrzeug nach einem der vorigen Ansprüche, **dadurch gekennzeichnet, dass** das Trittbrett (5) eine erste Seitenwand (8) und eine zweite Seitenwand (9) aufweist.

5. Landwirtschaftliches Einachsfahrzeug nach einem der vorigen Ansprüche, **dadurch gekennzeichnet, dass** an die Mittelachse (1) das Trittbrett (5) über eine Pendelstange (7) anbringbar ist, wobei die Pendelstange (7) einends das Trittbrett (5) ausbildet und andernends ein Pendelgelenk (10) ausbildet, wobei die Mittelachse (1) das Pendelgelenk (10) eine Festlegekulisse (13) aufweist und das Trittbrett (5) eine Festlegeanordnung (14) umfasst, wobei die Festlegeanordnung (14) in eine Festlegeausnehmung (15) der Festlegekulisse (13) einbringbar ist.

6. Landwirtschaftliches Einachsfahrzeug nach Anspruch 5, **gekennzeichnet durch** eine erste Seitenwand (8) und eine zweite Seitenwand (9).

## Claims

1. Agricultural single-axle vehicle with a centre axle (1), wherein the centre axle (1) has a spiked roller (2, 3) at each end, wherein the centre axle (1) has a drive and an agricultural implement (4) connected in a coupleable manner, wherein the centre axle (1) comprises a pivotably mounted running board (5),
**characterized in that**
the centre axle (1) has a locating link (13), wherein the running board (5) comprises a locating arrangement (14) and the locating arrangement (14) can be introduced into a locating recess (15) of the locating link (13).

2. Agricultural single-axle vehicle according to claim 1, **characterized in that** the running board (5) has a pendulum rod (7), wherein the pendulum rod (7) at one end forms the running board (5) and at the other end forms a pendulum joint (10).

3. Agricultural single-axle vehicle according to claim 2, **characterized in that** the centre axle (1) comprises the pendulum joint (10).

4. Agricultural single-axle vehicle according to one of the preceding claims, **characterized in that** the running board (5) has a first side wall (8) and a second side wall (9).

5. Agricultural single-axle vehicle according to one of the preceding claims, **characterized in that** the running board (5) can be attached to the centre axle (1) via an pendulum rod (7), wherein the pendulum rod (7) at one end forms the running board (5) and at the other end forms a pendulum joint (10), wherein the centre axle (1), the pendulum joint (10) has a locating link (13) and the running board (5) comprises a locating arrangement (14), wherein the locating arrangement (14) can be inserted into a locating recess (15) of the locating link (13).

6. Agricultural single-axle vehicle according to claim 5, **characterized in that** it has a first side wall (8) and a second side wall (9).

## Revendications

1. Véhicule agricole à un seul essieu comportant un essieu médian (1), dans lequel l'essieu médian (1) présente respectivement, côté extrémité, un cylindre à pointes (2, 3), dans lequel l'essieu médian (1) présente un entraînement et un outil agricole (4) relié de manière à pouvoir être accouplé, dans lequel l'essieu médian (1) comprend un marchepied (5) maintenu de manière à pouvoir pivoter,
**caractérisé en ce que**
l'essieu médian (1) présente une coulisse de fixation (13), dans lequel le marchepied (5) comprend un agencement de fixation (14) et l'agencement de fixation (14) peut être inséré dans un évidement de fixation (15) de la coulisse de fixation (13).

2. Véhicule agricole à un seul essieu selon la revendication 1,
**caractérisé en ce que** le marchepied (5) présente une tige pendulaire (7), dans lequel la tige pendulaire (7) forme, à une extrémité, le marchepied (5) et, à l'autre extrémité, une articulation pendulaire (10).

3. Véhicule agricole à un seul essieu selon la revendication 2,
**caractérisé en ce que** l'essieu médian (1) comprend l'articulation pendulaire (10).

4. Véhicule agricole à un seul essieu selon l'une des revendications précédentes, **caractérisé en ce que** le marchepied (5) présente une première paroi latérale (8) et une seconde paroi latérale (9).

5. Véhicule agricole à un seul essieu selon l'une des revendications précédentes, **caractérisé en ce que** le marchepied (5) peut être monté sur l'essieu médian (1) par l'intermédiaire d'une tige pendulaire (7), dans lequel la tige pendulaire (7) forme, à une extrémité, le marchepied (5) et, à l'autre extrémité, une articulation pendulaire (10), dans lequel l'essieu médian (1) l'articulation pendulaire (10) présente une coulisse de fixation (13) et le marchepied (5) comprend un agencement de fixation (14), dans lequel l'agencement de fixation (14) peut être inséré dans un évidement de fixation (15) de la coulisse de fixation (13).

6. Véhicule agricole à un seul essieu selon la revendication 5,
**caractérisé par** une première paroi latérale (8) et une seconde paroi latérale (9).
